# EUROPÄISCHE PATENTSCHRIFT

(11) **EP 3 025 948 B1**
(45) Veröffentlichungstag und Bekanntmachung des Hinweises auf die Patenterteilung: **08.11.2017**
(21) Anmeldenummer: 15003383.5
(22) Anmeldetag: 26.11.2015
(51) Int. Cl.: B62K 25/30, B62K 19/30

(54) **FAHRRADRAHMEN MIT EINER HINTERBAUFEDERUNG**
BICYCLE FRAME WITH A REAR SUSPENSION
CADRE DE VELO COMPRENANT UNE SUSPENSION ARRIERE

(30) Priorität: 28.11.2014 DE 102014017558
(43) Veröffentlichungstag der Anmeldung: 01.06.2016
(73) Patentinhaber: Jörn GmbH, 71336 Waiblingen (DE)
(72) Erfinder: Uhlig, Thomas, 73262 Reichenbach (DE)
(74) Vertreter: Liebl, Thomas

(56) Entgegenhaltungen:
- EP-A1- 1 602 571
- EP-A2- 0 947 418
- EP-A2- 1 010 610
- EP-A2- 1 247 731
- WO-A1-03/062039
- DE-C- 753 841
- FR-A- 460 371
- FR-A- 979 160
- US-B1- 6 386 567
- US-B1- 7 374 191

## Beschreibung

Die Erfindung betrifft einen Fahrradrahmen mit einer Hinterbaufederung nach dem Oberbegriff des Anspruchs 1.

Ein allgemein bekannter Fahrradrahmen als sogenannter Diamantrahmen besteht aus einem Hauptrahmen mit einen Oberrohr, einem Unterrohr, einem Sitzrohr und einem Steuerrohr und hat einen zylindrischen, quer zur Fahrtrichtung verlaufenden Bauraum an der Verbindungsstelle zwischen dem Unterrohr und dem Sitzrohr als Tretlagergehäuse.

Weiter weist der allgemein bekannte Fahrradrahmen einen Hinterbau auf, mit einer unteren Hinterradgabel, die von zwei Kettenstreben gebildet ist, und einer oberen Hinterradgabel, die von zwei nahezu parallelen Sitzstreben gebildet ist. Die untere Hinterradgabel und die obere Hinterradgabel sind jeweils einerseits mit dem Hauptrahmen verbunden und andererseits jeweils mit einander zugeordneten Kettenstreben und Sitzstreben an einer hinteren Verbindungsstelle verbunden.

Federungssysteme an Fahrrädern sind für Vorbauten, Sattelstützen, Vorderradgabeln und für Hinterbauten in unterschiedlichen Ausführungen allgemein bekannt. Hinterbaufederungen bestehen dabei aus einer als Schwinge ausgebildeten unteren Hinterradgabel, welche in einer Vertikalebene schwenkbar mit dem Hauptrahmen verbunden ist, wobei am hinteren Ende der Schwinge das Hinterrad über seine Nabe mit einem Klemm- oder Schraubsystem befestigbar ist. Eine solche Schwinge kann über eine mehrteilig ausgebildete obere Hinterradgabelanordnung mittels Feder- und Dämpferelementen an einem oberen Hauptrahmenbereich abgestützt werden. Die Feder- und Dämpferelemente können je nach Ausführungsform liegend oder stehend zur Längsrichtung des Fahrrads angeordnet sein. Bei einer solchen Hinterbaufederung muss die Kreisbewegung, welche die untere Hinterradgabel als Schwinge beim Einfedern beschreibt über ein gelenkig verbundenes Hebel- und Brückensystem in eine möglichst geradlinige Bewegung umgewandelt werden. Um die bei der Einfederung auftretenden Winkeländerungen der einzelnen Bauteile zueinander zu ermöglichen, werden Industrielager in die jeweiligen Gelenkpunkte eingepresst. Solche Industrielager unterliegen durch äußere Einflüsse und die relativ geringen Verdrehwinkel einem sehr hohen Verschleiß und müssen häufig ausgetauscht werden. Der höhere Fahrkomfort und/oder ein sportlicher Einsatz durch eine Hinterbaufederung werden hier somit durch einen hohen Wartungsaufwand erkauft.

Ein weiterer Nachteil solcher bekannter Hinterbaufederungen sind Abstandsveränderungen zwischen dem vorderen Tretlager und dem hinteren Ritzel beim Einfedern, was zu Fehlfunktionen beim Schalten führen kann.

Eine einfache und kostengünstige Maßnahme zur Verbesserung des Fahrkomforts besteht im Einsatz einer gefederten Sattelstütze, welche jedoch den Nachteil aufweist, dass sich durch die Einfederbewegungen die Sitzhöhe während des Fahrens ständig unangenehm verändert.

Die Verwendung und der Einbau von Federungssystemen an Fahrrädern bedingt relativ komplex aufgebaute Rahmenkonstruktionen, insbesondere Hinterbaukonstruktionen, die zur teueren, schweren und wartungsintensiven Fahrradtypen führen. Es sind daher nach wie vor auch viele Fahrradausführungen ohne Federungssysteme auf dem Markt. Bei der Entwicklung gerade solcher Fahrräder lag in den letzten Jahren das Hauptaugenmerk auf der Reduzierung des Gewichts bei gleichzeitiger Erhöhung der Steifigkeit von Rahmen und Anbauteilen. Dies hat zur Folge, dass fahrbahnangeregte Schwingungen, zum Beispiel beim Fahren auf rauhem Asphalt oder beim Überfahren von Fahrbahnunebenheiten nicht mehr durch den Rahmen und Anbauteile aufgenommen werden, sondern weitgehend direkt auf den Fahrer übertragen werden. Diese Belastungen lassen den Fahrer vergleichsweise schneller ermüden und es kann bei höheren Geschwindigkeiten zu negativen Einflüssen auf das Fahrverhalten kommen.

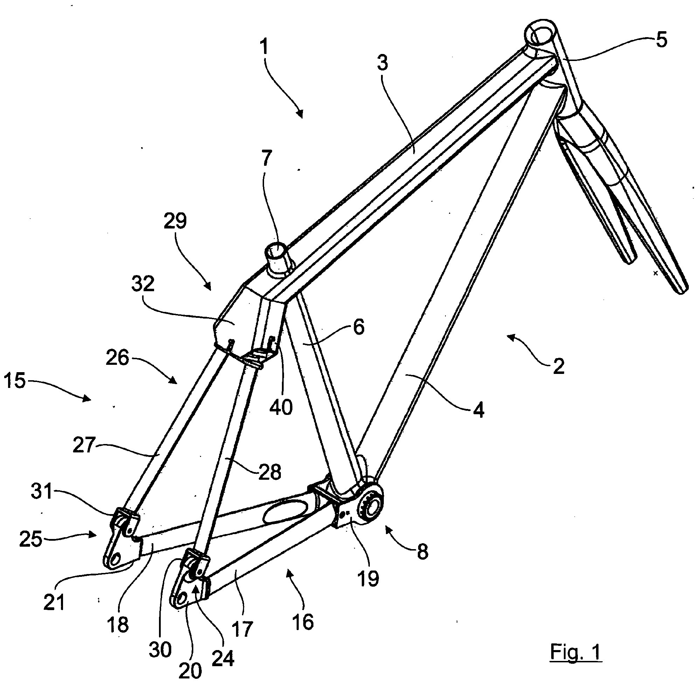

Zu den ausschließlich mit Muskelkraft angetriebenen Fahrrädern kommen immer mehr elektromotorisch unterstützte Fahrräder auf den Markt. Diese sind durch die Elektromotoren und Batterien relativ schwer und weisen einen steifen, stabilen Rahmen auf, so dass fahrbahnangeregte Schwingungen sehr direkt (ohne zusätzliche aufwendige Federungsmaßnahmen) mit den vorstehenden Nachteilen auf einen Fahrer übertragen werden. US 6,386,597 B1 ist der nächstliegender Stand der Technik und es offenbart die Merkmale gemäß den Oberbegriff des Anspruchs 1. Aus US 6,386,567 B1 ist zudem ein Fahrradrahmen bekannt in einer Ausführungsform (Fig. 1) bei der eine untere Hinterradgabel eines Hinterbaus im Tretlagerbereich mit einer Gleitlagerung schwenkbar gelagert und eine obere Hinterradgabel im oberen Bereich mit einer Schwinge und einem nachgeordnetem Torsions-Dämpferelement am Hauptrahmen abgestützt ist. In einer anderen Ausführungsform (Fig. 11 E) ist eine untere Hinterradgabel im Tretlagerbereich mit einem Elastomerlager schwenkbar gelagert.

Aus US 7,374,191 B1 ist weiter eine Abstützung einer oberen Hinterradgabel am Hauptrahmen mittels eines Dämpferelements bekannt, das als Teleskoprohranordnung mit einer eingesetzten Gleitbuchse und einem Elastomerkörper ausgebildet ist.

Aus DE 753 841 C ist eine schwenkbare elastische Verbindung einer unteren Hinterradgabel zusammen mit einem Tretlager am Hauptrahmen bekannt.

Weiter ist aus DR 979 160 A eine Anbindung einer oberen Hinterradgabel mit einer Spiralfeder bekannt.

Aufgabe der Erfindung ist es, einen Fahrradrahmen mit einer einfach und kostengünstig aufgebauten Hinterbaufederung vorzuschlagen, die bei hohem Fahrkomfort wartungsfrei ist und bei der auch bei Einfederbewegungen die Sitzposition des Fahrers bezüglich des Rahmens weitgehend unverändert bleibt.

Diese Aufgabe wird mit den Merkmalen des Patentanspruchs 1 gelöst. Vorteilhafte Ausgestaltungen sind Gegenstand der Unteransprüche.

Gemäß Patentanspruch 1 ist das Schwenklager für die als Schwinge ausgeführte, untere Hinterradgabel einerseits durch eine in den, vorzugsweise zylindrischen, Bauraum an der Verbindungsstelle zwischen dem Unterrohr und dem Sitzrohr verdrehfest eingesetzte Elastomer-Metall-Buchse gebildet, die ein stabiles Innenrohr aufweist. Dieses Innenrohr ist zumindest teilweise von einem oder mehreren Elastomerkörper umgeben und starr mit der unteren Hinterradgabel verbunden, so dass eine Schwenkbewegung der unteren Hinterradgabel beim Einfedern des Hinterrads im Schwenklager molekular und federnd rückstellend im Elastomermaterial aufgenommen wird. Das Innenrohr ist mit seinem zylindrischen Innenraum zudem als Tretlagergehäuse zur Aufnahme des Tretlagers für einen Kurbeltrieb ausgebildet. Zudem ist für eine weitere gute Beherrschung der bei Einfedervorgängen auftretenden Bauteilbewegungen am Hinterbau andererseits die obere Hinterradgabel im Bereich der Verbindungsstelle zwischen Oberrohr und Sitzrohr mit einem Dämpferelement verbunden ist, wobei das Dämpferelement ein als V-Lager ausgebildetes Elastomer-Metall-Lager ist mit einem V-förmigen Lagerinnenteil mit einer Basisplatte, an der gegeneinander versetzt die beiden Sitzstreben mit ihren oberen Enden starr angeschlossen sind. Weiter sind nach oben keilförmig an einem V-förmigen Stützteil Elastomerpakete angeordnet und angehaftet, gegebenenfalls mit Zwischenblechen, die in einem V-Lager-Gehäuse aufgenommen und angeschlossen sind, das starr mit dem Hauptrahmen verbunden ist.

Ein so ausgebildetes V-Lager kann einerseits Zwangsbewegungen, welche durch Einfederungen veranlasst sind, molekular und wartungsfrei in den Elastomerpaketen aufnehmen und zudem auftretende Schwingungen in geeigneter Weise dämpfen, wobei durch die Auslegung des V-Lagers dazu geeignete Dimensionierungsfreiräume vorliegen.

Richtungsangaben, wie oben oder unten, zum Beispiel in Verbindung mit einem Oberrohr oder einem Unterrohr, sind hier jeweils auf die Hochachsenrichtung des Fahrradrahmens bezogen. Richtungsangaben, wie vorne oder hinten, zum Beispiel in Verbindung mit einem Hinterbau sind hier jeweils auf die Längsrichtung des Fahrradrahmens bezogen, und hier insbesondere auf die Fahrtrichtung eines Fahrrads.

Die kinematischen Gegebenheiten bei Einfedervorgängen in Verbindung mit Schwenkbewegungen der unteren Hinterradgabel sind weiter gut umsetzbar, wenn gemäß Anspruch 2 die Verbindungen zwischen den Kettenstreben und Sitzstreben als Drehlager mit quer zur Fahrtrichtung verlaufenden Drehachsen ausgebildet sind.

Zweckmäßig werden nach Anspruch 3 auch diese Drehlager mittels wartungsfreier Elastomer-Metall-Buchsen gebildet, welche in Aufnahmeaugen eingesetzt sind. Solche Aufnahmeaugen sind vorzugsweise an den Kettenstreben oberhalb der Ausfallenden angebracht, wobei dann die Sitzstreben an einem Innenrohr der jeweiligen Elastomer-Metall-Buchse angeschlossen sind. Alternativ könnte gegebenenfalls auch in einer kinematischen Umkehr das Aufnahmeauge an der Sitzstrebe angebracht sein und die zugeordnete Kettenstrebe am Innenrohr der dortigen Elastomer-Metall-Buchse angeschlossen sein.

Besonders vorteilhaft sollen nach Anspruch 4 die verwendeten Elastomer-Metall-Buchsen, sowohl die Elastomer-Metall-Buchse als Schwenklager im zylindrischen Aufnahmeraum für die untere Hinterradgabel und/oder die Elastomer-Metall-Buchsen als Drehlager zur Verbindung der Kettenstreben, in die zugeordneten Aufnahmeaugen unter einer Vorspannung im Elastomermaterial eingepresst werden. Damit können vorteilhaft die Elastomer-Metall-Buchsen ohne weitere Maßnahmen verdrehfest in ihren Aufnahmeräumen fixiert werden. Zudem wird damit verhindert, dass das Elastomermaterial, insbesondere ein Gummimaterial, ungünstig auf Zug belastet wird. Zudem steht damit eine Dimensionierungsmaßnahme für eine geeignete Auslegung der Federraten zur Verfügung.

Als Schlitzbuchsen ausgebildete Elastomer-Metall-Buchsen sind nach Anspruch 5 für den vorliegenden Einsatzfall besonders geeignet. Solche Schlitzbuchsen bestehen aus einem stabilen Innenrohr, das von einem angehafteten Elastomer-Ringkörper umgeben ist, der wiederum von einer angehafteten Hülse, zum Beispiel einer Blech- oder Kunststoffhülse, umgeben wird. Für den vorliegenden Einsatzfall sind bezüglich des Elastomermaterials einschichtige Schlitzbuchsen geeignet. Gegebenenfalls können aber auch mehrschichtige Schlitzbuchsen mit zwischen den Elastomerschichten angebrachten Zwischenblechen verwendet werden. Im Herstellzustand ist in der Hülse und anschließend im Elastomer-Ringkörper ein achsparalleler Längsschlitz angebracht, der im eingepressten Montagezustand in Verbindung mit einer Durchmesserreduzierung des Außendurchmessers der Schlitzbuchse geschlossen wird.

Zudem können nach Anspruch 6 durch Einfedervorgänge verursachte Belastungen und Bewegungen der Sitzstreben weiter dadurch ausgeglichen und abgestützt werden, dass diese verformbar und in eine Ausgangsstellung rückstellend ausgebildet sind. Dies kann insbesondere durch die Wahl eines elastischen Strebenmaterials erfolgen. Auch Teleskopanordnungen können je nach den Gegebenheiten verwendbar sein.

In einer konstruktiv einfachen und kostengünstigen Ausführungsform nach Anspruch 7 weist die untere Hinterradgabel als Schwinge ein Gabelteil auf, das in Längsrichtung hinter dem Tretlagergehäuse angeordnet ist und mit dem Innenrohr der dortigen Elastomer-Metall-Buchse kraft- und formschlüssig verbunden ist und an dem weiter die zwei Kettenstreben angebracht sind.

Als Elastomermaterial kann nach Anspruch 8 Gummi verwendet werden, der jeweils mittels Vulkanisation angehaftet ist.

Gemäß Anspruch 9 kann der Fahrradrahmen mit der erfindungsgemäßen Hinterbaufederung besonders vorteilhaft bei einem Fahrrad mit elektrisch unterstütztem Antrieb eingesetzt werden.

Des Weiteren sei an dieser Stelle erwähnt, dass, wie mit Anspruch 10 beansprucht, anstelle einer Elastomer-Metall-Buchse selbstverständlich auch eine Elastomer-Kunststoff-Buchse verwendet werden kann, das heißt, dass überall dort, wo im Rahmen der vorliegenden Erfindung von einer Elastomer-Metall-Buchse gesprochen wird, auch eine Elastomer-Kunststoff-Buchse eingesetzt werden kann, bei der die Metallteile dann wenigstens zum Teil durch entsprechende Kunststoffteile ersetzt sind. Die Begrifflichkeit Elastomer-Metall-Buchse ist hier somit ausdrücklich in einem weiten Sinne zu verstehen und soll sämtliche geeigneten Werkstoffe umfassen.

Anhand einer Zeichnung wird die Erfindung weiter erläutert.

Es zeigen:
- Fig. 1: einen Fahrradrahmen in perspektivischer Darstellung,
- Fig. 2: den Fahrradrahmen nach Fig. 1 in einer Seitenansicht,
- Fig. 3: eine vergrößerte Darstellung eines Dämpferelements (ohne Gehäuse),
- Fig. 4: eine vergrößerte Darstellung des Tretlagerbereichs, und
- Fig. 5: eine vergrößerte Darstellung im Bereich der Ausfallenden der Kettenstreben.

In Fig. 1 ist ein Fahrradrahmen 1 dargestellt mit einem Hauptrahmen 2 aus einem Oberrohr 3, einen Unterrohr 4, einem Steuerrohr 5 und einem Sitzrohr 6. Im Bereich der Verbindung zwischen dem Oberrohr 3 und dem Sitzrohr 6 ist eine Sattelstützenaufnahme 7 angebracht.

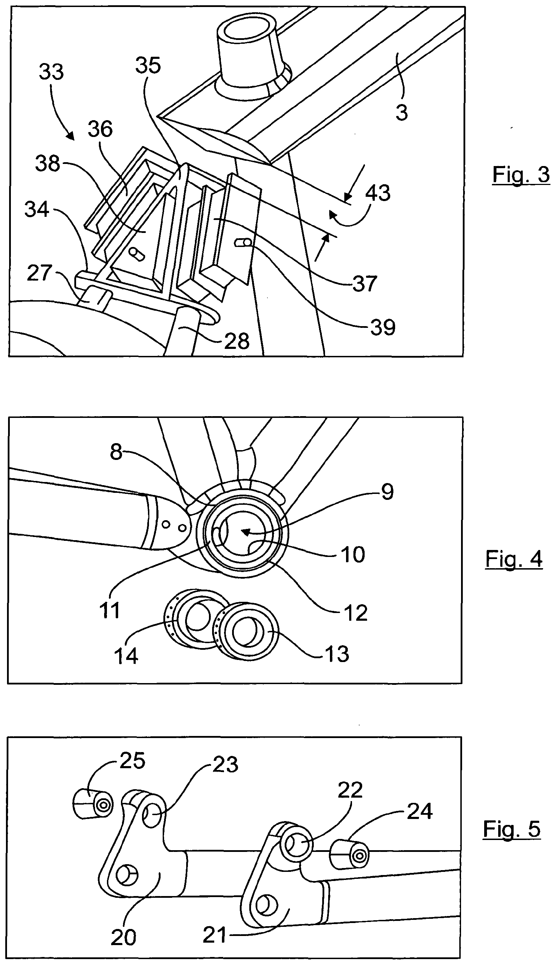

An der Verbindungsstelle zwischen dem Unterrohr 4 und dem Sitzrohr 6 liegt ein quer zur Fahrtrichtung verlaufender zylindrischer Bauraum 8, in den eine Elastomer-Metall-Buchse 9 als Schwenklager verdrehfest und unter Vorspannung eingepresst ist, wie dies im Detail vergrößert aus Fig. 4 ersichtlich ist.

Die Elastomer-Metall-Buchse 9 ist als Schlitzbuchse ausgebildet und besteht zum Beispiel aus einem stabilen Innenrohr 10 aus Metall, das von einem angehafteten Elastomer-Ringkörper 11 umgeben ist, der wiederum von einer angehafteten Hülse, hier beispielhaft einer Blechhülse 12, umgeben ist. Im Herstellzustand weist die Blechhülse 12 und anschließend der Elastomer-Ringkörper 11 einen achsparallelen Längsschlitz auf, der, wie in Fig. 4 gezeigt, im eingepressten Montagezustand in Verbindung mit einer Durchmesserreduzierung geschlossen ist.

Der zylindrische Innenraum des Innenrohrs 10 wird als Tretlagergehäuse genutzt zur Aufnahme des hier zweiteiligen Tretlagers 13, 14 für einen (nicht dargestellten) Kurbeltrieb.

Ein Hinterbau 15 des Fahrradrahmens 1 besteht aus einer unteren Hinterradgabel 16 als Schwinge, die von zwei parallelen Kettenstreben 17, 18 und einem Gabelteil 19 gebildet ist. Das Gabelteil 19 liegt in Längsrichtung hinter dem zylindrischen Bauraum 8 und ist beidseitig verdrehfest mit dem Innenrohr 10 verbunden (in Fig. 4 ist zur Sichtbarmachung der Elastomer-Metall-Buchse 9 das Gabelteil 19 weggelassen). Am Gabelteil 19 sind die nach hinten gerichteten beiden Kettenstreben 17, 18 befestigt.

Im oberen Bereich der Ausfallenden 20, 21 der Kettenstreben 17, 18 sind Aufnahmeaugen 22, 23 angebracht, in die jeweils im Vergleich zur Elastomer-Metall-Buchse 9 kleinere Elastomer-Metall-Buchsen 24, 25 als Schlitzbuchsen eingepresst sind, wie dies vergrößert vor dem Einpressen in Fig. 5 dargestellt ist.

Der Hinterbau 15 weist weiter eine obere Hinterradgabel 26 auf mit zwei Sitzstreben 27, 28, die im Bereich der Verbindungsstelle zwischen Oberrohr 3 und Sitzrohr 6 mit einem Dämpferelement 29 mit dem Hauptrahmen 2 verbunden sind. Die unteren Enden der Sitzstreben 27, 28 sind jeweils über Gabelteile 30, 31 beidseitig mit dem Innenrohr der Elastomer-Metall-Buchsen 24, 25 starr verbunden.

Wie aus der vergrößerten Darstellung nach Fig. 3 ersichtlich, ist das Dämpferelement 29 ein Elastomer-Metall-Lager, welches als sogenanntes V-Lager ausgebildet ist. In Fig. 3 ist ein V-Lagergehäuse 32 zur Verdeutlichung des Innenaufbaus des Dämpferelements 29 weggelassen. Das V-Lagergehäuse 32, welches am hinteren Ende des Oberrohrs 3 angeschlossen ist, ist aus Fig. 1 ersichtlich.

Das V-förmige Lagerinnenteil 33 des Dämpferelements 29 weist eine untere Basisplatte 34 auf, an der die oberen Enden der Sitzstreben 27, 28 angeschlossen sind. Von der Basisplatte 34 erstreckt sich nach oben ein V-förmiges Stützteil 35, an dessen Seitenflächen keilförmig nach oben verlaufende Elastomerpakete 36, 37 angeordnet sind, die zudem jeweils eine Metallzwischenplatte und eine Metallaußenplatte aufweisen. In einem keilförmigen Innenraum des Stützteils 35 kann zudem ein weiteres Elastomerpaket 38 angebracht sein, das durch eine äußere Metallplatte abgeschlossen ist. Die äußeren Metallplatten tragen jeweils Stützstifte 39, die in zugeordnete Aufnahmeschlitze 40 des V-Lager-Gehäuses 32 eingreifen.

Das in Fig. 3 dargestellte Lagerinnenteil 33 ist vom hinteren Ende des Oberrohrs 3 mit einer Distanz 43 beabstandet, die den möglichen Federweg in Längsrichtung der Sitzstreben 27, 28 darstellt.

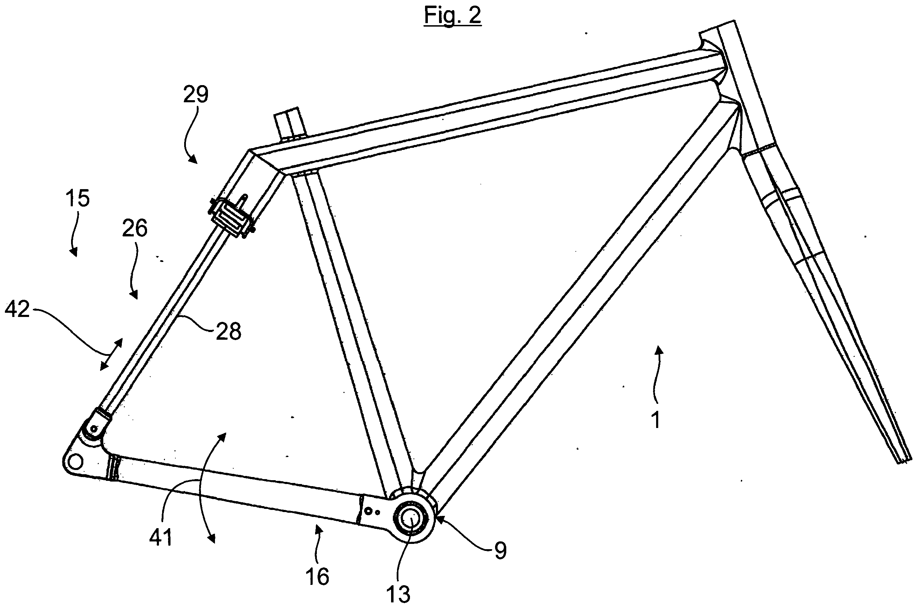

In Fig. 2 ist eine Seitenansicht des Fahrradrahmens 1 aus Fig. 1 dargestellt, an der schematisch die Bewegungsabläufe bei einem Einfedervorgang des Hinterbaus 15 gezeigt werden. Bei einem Einfedervorgang des Hinterrads wird die untere Hinterradgabel 16 in der Art einer Schwinge verschwenkt (Doppelpfeil 41), wobei diese Bewegung als Drehschubbelastung im Elastomer-Ringkörper 11 der Elastomer-Metall-Buchse 9 am Tretlager 13 aufgenommen wird. Bei einem beispielhaft angenommenen Einfederweg von ca. 25 mm am Hinterrad wird das Innenrohr 10 der Elastomer-Metall-Buchse 9 um ca. 4° bis 5° verdreht. Der Einfederweg des Hinterrads von ca. 25 mm wird über die obere Hinterradgabel 26 bzw. die Sitzstreben 28, 29 etwa in der gleichen Größe (Doppelpfeil 42) in das Dämpferelement 29 geleitet, welches die Bewegung dort nachgiebig gedämpft abstützt.

## Patentansprüche

1. Fahrradrahmen (23) mit einer Hinterbaufederung bestehend aus einem Hauptrahmen (2) mit einemOberrohr (3), einem Unterrohr (4), einem Sitzrohr (6) und einem Steuerrohr (5), sowie mit einem, vorzugsweise zylindrischen, quer zur Fahrtrichtung verlaufenden Bauraum (8) an der Verbindungsstelle zwischen dem Unterrohr (4) und dem Sitzrohr (6), und
aus einem Hinterbau (15) mit einer unteren Hinterradgabel (16) als Schwinge, die von zwei, vorzugsweise V-förmig gepfeilten und/oder im Wesentlichen parallelen, Kettenstreben (17, 18) gebildet ist und die einerseits über ein Schwenklager (9) in einer Rahmenebene schwenkbar mit dem Hauptrahmen (2) verbunden ist, wobei
das Schwenklager für die als Schwinge ausgeführte untere Hinterradgabel (16) durch eine in den Bauraum (8) verdrehfest eingesetzte Elastomer-Metall-Buchse (9) gebildet ist, die ein Innenrohr (10) aufweist, das zumindest teilweise von einem oder mehreren Elastomerkörpern (11) umgeben ist und das starr mit der unteren Hinterradgabel (16) verbunden ist, so dass eine Schwenkbewegung der unteren Hinterradgabel (16) beim Einfedern des Hinterrads molekular und federnd rückstellend im Elastomermaterial des oder der Elastomerkörper (11) aufgenommen wird, und
dass der Innenraum des Innenrohrs (10) zudem als Tretlagergehäuse zur Aufnahme des Tretlagers (13, 14) für einen Kurbeltrieb ausgebildet ist,
dass der Hinterbau (15) eine obere Hinteradgabel (26) aufweist, die von zwei, vorzugsweise V-förmig gepfeilten und/oder im Wesentlichen parallelen, Sitzstreben (27, 28) gebildet ist, die einerseits im Bereich der Verbindungsstelle zwischen Oberrohr (3) und Sitzrohr (6) mit dem Hauptrahmen (2) verbunden ist, wobei die Enden der jeweils seitlich zugeordneten Kettenstreben (17, 18) und Sitzstreben (27, 28) verbunden sind und an dieser Verbindungsstelle ein hinteres Laufrad mit seiner Nabe befestigbar ist, **dadurch gekennzeichnet, dass** die obere Hinterradgabel (26) im Bereich der Verbindungsstelle zwischen Oberrohr (3) und Sitzrohr (6) mit einem Dämpferelement (29) mit dem Hauptrahmen (2) verbunden ist und das Dämpferelement (29) ein als V-Lager ausgebildetes Elastomer-Metall-Lager ist, mit einem V-förmigen Lager-Innenteil (33) mit einer Basisplatte (34), an der gegeneinander versetzt die beiden Sitzstreben (27, 28) mit ihren oberen Enden starr angeschlossen sind und mit nach oben keilförmig an einem V-förmigen Stützteil (35) angeordneten und angehafteten Elastomerpaketen (36, 37, 38), gegebenenfalls mit Zwischenblechen, die in einem V-Lager-Gehäuse (32) aufgenommen und angeschlossen sind, das starr mit dem Hauptrahmen (2) verbunden ist.

2. Fahrradrahmen nach Anspruch 1, **dadurch gekennzeichnet, dass** die Verbindungen zwischen den Kettenstreben (17, 18) und Sitzstreben (27, 28) als Drehlager mit quer zur Fahrtrichtung verlaufenden Drehachsen ausgebildet sind.

3. Fahrradrahmen nach Anspruch 2, **dadurch gekennzeichnet, dass** die Drehlager mittels Elastomer-Metall-Buchsen (24, 25) gebildet sind, die in Aufnahmeaugen (22, 23) an den Kettenstreben (17, 18) vorzugsweise oberhalb der Ausfallenden (20, 21) oder alternativ an den Sitzstreben (27, 28) eingesetzt sind, wobei jeweils an einem Innenrohr der jeweiligen Elastomer-Metall-Buchse (24, 25) ein Ende der zugeordneten Sitzstrebe (27, 28) oder alternativ der zugewandten Kettenstrebe (17, 18) angeschlossen ist.

4. Fahrradrahmen nach einem der Ansprüche 1 bis 3, **dadurch gekennzeichnet, dass** die Elastomer-Metall-Buchse (9) als Schwenklager in den Bauraum (8) und/oder die Elastomer-Metall-Buchsen (24, 25) als Drehlager in die zugeordneten Aufnahmeaugen (22, 23) unter Aufbringung einer Vorspannung im Elastomermaterial eingepresst sind.

5. Fahrradrahmen nach Anspruch 4, **dadurch gekennzeichnet, dass** die verwendeten Elastomer-Metall-Buchsen (9, 24, 25) als Schlitzbuchsen ausgebildet sind, jeweils mit einem stabilen Innenrohr (10), den ein Elastomerkörper (11) als angehafteter Elastomer-Ringkörper umgibt, der wiederum von einer angehafteten Hülse (12) umgeben ist, wobei sich im Herstellzustand in der Hülse (12) und anschließend im Elastomer-Ringkörper ein achsparalleler Längsschlitz befindet, der im eingepressten Montagezustand geschlossen ist.

6. Fahrradrahmen nach einem der Ansprüche 1 bis 5, **dadurch gekennzeichnet, dass** die Sitzstreben (27, 28) ausgehend von einer Grundform verformbar und wieder rückstellbar ausgebildet sind, insbesondere elastisch verformbar sind.

7. Fahrradrahmen nach einem der Ansprüche 1 bis 6, **dadurch gekennzeichnet, dass** die untere Hinterradgabel (16) als Schwinge ein Gabelteil (19) aufweist, das in Längsrichtung hinter dem Tretlagergehäuse angeordnet ist und mit dem Innenrohr (10) der dortigen Elastomer-Metall-Buchse (9) kraft- und formschlüssig verbunden ist, und an dem die zwei Kettenstreben (17, 18) angeschlossen sind.

8. Fahrradrahmen nach einem der Ansprüche 1 bis 7, **dadurch gekennzeichnet, dass** als Elastomermaterial Gummi verwendet ist, der jeweils mittels Vulkanisation angehaftet ist.

9. Fahrradrahmen nach einem der Ansprüche 1 bis 8, **dadurch gekennzeichnet, dass** der Fahrradrahmen (1) mit der Hinterbaufederung für ein Fahrrad mit elektrisch unterstütztem Antrieb ausgelegt ist.

10. Fahrradrahmen nach einem der Ansprüche 1 bis 9, **dadurch gekennzeichnet, dass** anstelle einer Elastomer-Metall-Buchse (9) eine Elastomer-Kunststoff-Buchse verwendet ist.

## Claims

1. Bicycle frame (23) with a rear suspension,
comprising a main frame (2) having a top tube (3), a down tube (4), a seat tube (6) and a head tube (5), and having a preferably cylindrical installation space (8) running transversely to the direction of travel and located at the site of connection between the down tube (4) and the seat tube (6), and
comprising a rear-end structure (15) having a bottom rear fork (16), in the form of a swing arm, which is formed by two chainstays (17, 18), angled preferably in a V-shaped manner and/or essentially parallel, and which is connected to the main frame (2) at one end via a pivot bearing (9), such that it can be pivoted in a frame plane,
wherein the pivot bearing for the bottom rear fork (16), designed in the form of a swing arm, is formed by an elastomer/metal bushing (9), which is inserted in a rotationally fixed manner into the installation space (8) and has an inner tube (10), which is enclosed, at least in part, by one or more elastomer bodies (11) and is connected rigidly to the bottom rear fork (16), and therefore a pivoting movement of the bottom rear fork (16), upon deflection of the rear wheel, is absorbed in the molecular structure of, and with resiliently restoring action in, the elastomer material of the elastomer body or bodies (11), and
in that the interior of the inner tube (10), in addition, is designed in the form of a bottom-bracket housing for accommodating the bottom bracket (13, 14) for a crank drive, and
in that the rear-end structure (15) has a top rear fork (26), which is formed by two seatstays (27, 28), angled in a preferably V-shaped manner and/or essentially parallel, and which is connected to the main frame (2) at one end in the region of the site of connection between the top tube (3) and seat tube (6), wherein the ends of the respectively laterally associated chainstays (17, 18) and seatstays (27, 28) are connected and a rear wheel can be fastened, by way of its hub, at this site of connection,
**characterized**
**in that** the top rear fork (26), in the region of the site of connection between the top tube (3) and seat tube (6), is connected to the main frame (2) by a damper element (29) and the damper element (29) is an elastomer/metal bearing designed in the form of a V bearing, with a V-shaped inner bearing part (33) with a base plate (34), to which the two seatstays (27, 28) are rigidly connected in a mutually offset manner by way of their upper ends, and with elastomer units (36, 37, 38), possibly with intermediate plates, which are arranged on, and attached to, a V-shaped supporting part (35) in an upwardly wedge-shaped manner and are accommodated, and connected, in a V-bearing housing (32), which is connected rigidly to the main frame (2).

2. Bicycle frame according to Claim 1, **characterized in that** the connections between the chainstays (17, 18) and seatstays (27, 28) are designed in the form of rotary bearings with axes of rotation running transversely to the direction of travel.

3. Bicycle frame according to Claim 2, **characterized in that** the rotary bearings are formed by means of elastomer/metal bushings (24, 25) which are inserted into accommodating eyelets (22, 23) on the chainstays (17, 18), preferably above the dropouts (20, 21), or alternatively on the seatstays (27, 28), wherein one end of the associated seatstay (27, 28), or alternatively of the associated chainstay (17, 18), is connected in each case to an inner tube of the respective elastomer/metal bushing (24, 25).

4. Bicycle frame according to one of Claims 1 to 3, **characterized in that** the elastomer/metal bushing (9), in the form of a pivot bearing, is pressed into the installation space (8), and/or the elastomer/metal bushings (24, 25), in the form of rotary bearings, are pressed into the associated accommodating eyelets (22, 23), with prestressing applied in the elastomer material.

5. Bicycle frame according to Claim 4, **characterized in that** the elastomer/metal bushings (9, 24, 25) used are designed in the form of slit bushings, each with a stable inner tube (10) enclosed by an elastomer body (11) in the form of an attached annular elastomer body, which in turn is enclosed by an attached sleeve (12), wherein, in the production state, an axis-parallel longitudinal slit is located in the sleeve (12), and then in the annular elastomer body, said longitudinal slit being closed in the pressed-in installation state.

6. Bicycle frame according to one of Claims 1 to 5, **characterized in that** the seatstays (27, 28) are designed such that they can be deformed from a basic shape and restored again, in particular they are elastically deformable.

7. Bicycle frame according to one of Claims 1 to 6, **characterized in that** the bottom rear fork (16), in the form of a swing arm, has a fork part (19) which is arranged behind the bottom-bracket housing, as seen in the longitudinal direction, is connected in a force-fitting and form-fitting manner to the inner tube (10) of the elastomer/metal bushing (9) there and has the two chainstays (17, 18) connected to it.

8. Bicycle frame according to one of Claims 1 to 7, **characterized in that** the elastomer material used is rubber, which is attached in each case by means of vulcanization.

9. Bicycle frame according to one of Claims 1 to 8, **characterized in that** the bicycle frame (1) with the rear suspension is designed for a bicycle with an electrically assisted drive.

10. Bicycle frame according to one of Claims 1 to 9, **characterized in that**, instead of an elastomer/metal bushing (9), use is made of an elastomer/plastics-material bushing.

## Revendications

1. Cadre de bicyclette (23) comprenant une suspension arrière constituée d'un cadre principal (2) avec un tube supérieur (3), un tube intérieur (4), un tube de selle (6) et un tube de commande (5), et comprenant également un espace de montage (8) de préférence cylindrique, s'étendant transversalement à la direction de conduite, au niveau de la zone de connexion entre le tube inférieur (4) et le tube de selle (6), et une structure arrière (15) avec une fourche de roue arrière inférieure (16) en tant que bras oscillant, qui est formée par deux bases de cadre (17, 18) de préférence en forme de flèche en forme de V et/ou essentiellement parallèles, et qui est raccordée d'une part par le biais d'un palier pivotant (9) dans un plan de cadre de manière pivotante au cadre principal (2),
le palier pivotant pour la fourche de roue arrière inférieure (16) réalisée en tant que bras oscillant étant formé par une douille métallique-élastomère (9) insérée de manière solidaire en rotation dans l'espace de montage (8), qui présente un tube intérieur (10) qui est entouré au moins en partie par un ou plusieurs corps en élastomère (11) et qui est raccordé rigidement à la fourche de roue arrière inférieure (16) de telle sorte qu'un mouvement de pivotement de la fourche de roue arrière inférieure (16) lors de la compression de la suspension de la roue arrière soit absorbé au niveau moléculaire et avec rappel élastique dans le matériau élastomère du ou des corps en élastomère (11), et
que l'espace interne du tube intérieur (10) est réalisé en outre en tant que boîtier de pédalier pour recevoir le pédalier (13, 14) pour un entraînement à manivelle,
que la structure arrière (15) présente une fourche de roue arrière supérieure (26) qui est formée par deux haubans (27, 28) de préférence en forme de flèche en forme de V et/ou essentiellement parallèles, qui est raccordée d'une part dans la région de la zone de raccordement entre le tube supérieur (3) et le tube de selle (6) au cadre principal (2), les extrémités des bases de cadre (17, 18) et des haubans (27, 28) respectivement associées latéralement étant raccordées et une roue mobile arrière avec son moyeu pouvant être fixée à cette zone de raccordement,
**caractérisé en ce que**
la fourche de roue arrière supérieure (26) est raccordée au cadre principal (2) dans la région de la zone de raccordement entre le tube supérieur (3) et le tube de selle (6) par un élément d'amortissement (29) et l'élément d'amortissement (29) est un palier métallique-élastomère réalisé sous forme de palier en V, avec une partie intérieure de palier en forme de V (33) avec une plaque de base (34) à laquelle sont raccordés rigidement de manière décalée l'un par rapport à l'autre les deux haubans (27, 28) avec leurs extrémités supérieures et avec des paquets en élastomère (36, 37, 38) disposés et adhérant en forme de coin vers le haut au niveau d'une pièce de support en forme de V (35), éventuellement avec des tôles intermédiaires, qui sont reçues et raccordées dans un boîtier de palier en V (32) qui est raccordé rigidement au cadre principal (2).

2. Cadre de bicyclette selon la revendication 1, **caractérisé en ce que** les raccordements entre les bases de cadre (17, 18) et les haubans (27, 28) sont réalisés sous forme de paliers pivotants avec des axes de rotation s'étendant transversalement à la direction de conduite.

3. Cadre de bicyclette selon la revendication 2, **caractérisé en ce que** les paliers pivotants sont formés au moyen de douilles métalliques-élastomères (24, 25) qui sont insérées dans des oeillets de réception (22, 23) sur les bases de cadre (17, 18), de préférence au-dessus des pattes de dérailleur (20, 21) ou en variante au niveau des haubans (27, 28), une extrémité du hauban associé (27, 28), ou en variante, de la base de cadre (17, 18) en regard, étant à chaque fois raccordée à un tube intérieur de la douille métallique-élastomère respective (24, 25).

4. Cadre de bicyclette selon l'une quelconque des revendications 1 à 3, **caractérisé en ce que** la douille métallique-élastomère (9) est enfoncée en tant que palier pivotant dans l'espace de montage (8) et/ou les douilles métalliques-élastomères (24, 25) sont enfoncées en tant que paliers pivotants dans les oeillets de réception associés (22, 23) en appliquant une précontrainte dans le matériau élastomère.

5. Cadre de bicyclette selon la revendication 4, **caractérisé en ce que** les douilles métalliques-élastomères utilisées (9, 24, 25) sont réalisées sous forme de douilles fendues, à chaque fois avec un tube intérieur stable (10), entouré par un corps en élastomère (11) en tant que corps annulaire en élastomère adhérant, qui est à son tour entouré par une douille adhérente (12), une fente longitudinale d'axe parallèle étant située dans l'état venu de fabrication dans la douille (12) et ensuite dans le corps annulaire en élastomère, laquelle est fermée dans l'état de montage enfoncé.

6. Cadre de bicyclette selon l'une quelconque des revendications 1 à 5, **caractérisé en ce que** les haubans (27, 28) sont réalisés de manière à pouvoir être déformés à partir d'une forme de base et à revenir à nouveau, en particulier peuvent être déformés élastiquement.

7. Cadre de bicyclette selon l'une quelconque des revendications 1 à 6, **caractérisé en ce que** la fourche de roue arrière inférieure (16) présente, en tant que bras oscillant, une partie de fourche (19) qui est disposée dans la direction longitudinale derrière le boîtier de pédalier et est raccordée par engagement par force et par correspondance de formes au tube intérieur (10) de la douille métallique-élastomère à cet endroit (9), et à laquelle sont raccordées les deux bases de cadre (17, 18).

8. Cadre de bicyclette selon l'une quelconque des revendications 1 à 7, **caractérisé en ce que** l'on utilise comme matériau élastomère du caoutchouc qui est adhéré à chaque fois par vulcanisation.

9. Cadre de bicyclette selon l'une quelconque des revendications 1 à 8, **caractérisé en ce que** le cadre de bicyclette (1) est conçu avec la suspension arrière pour une bicyclette à entraînement à assistance électrique.

10. Cadre de bicyclette selon l'une quelconque des revendications 1 à 9, **caractérisé en ce que** l'on utilise une douille plastique-élastomère au lieu d'une douille métallique-élastomère (9).
